# EUROPÄISCHE PATENTSCHRIFT

(11) **EP 1 554 861 B1**
(45) Veröffentlichungstag und Bekanntmachung des Hinweises auf die Patenterteilung: **26.12.2012**
(21) Anmeldenummer: 03788957.3
(22) Anmeldetag: 22.10.2003
(51) Int. Cl.: H04M 1/247

(54) **MOBILFUNKENDGERÄT MIT VISUELL GESTEUERTER MENÜFÜHRUNG**
MOBILE RADIO TERMINAL FEATURING VISUALLY CONTROLLED MENU-ASSISTED OPERATION
TERMINAL DE RADIOTELEPHONIE MOBILE POURVU D'UNE NAVIGATION MENU A COMMANDE VISUELLE

(30) Priorität: 23.10.2002 DE 10249528
(43) Veröffentlichungstag der Anmeldung: 20.07.2005
(73) Patentinhaber: Vodafone Holding GmbH, 40213 Düsseldorf (DE)
(72) Erfinder: RUNGE, Matthias, 40211 Düsseldorf (DE); GERSTNER, Alexander, 40477 Düsseldorf (DE); WIERZBITZKI, Dirk, 40885 Ratingen (DE)
(74) Vertreter: Weisse, Renate
(86) Internationale Anmeldenummer: PCT/EP2003/011668
(87) Internationale Veröffentlichungsnummer: WO 2004/039087

(56) Entgegenhaltungen:
- EP-A- 0 812 120
- EP-A- 1 028 570
- WO-A-03/041373
- DE-A- 19 835 013
- US-A1- 2002 137 502
- US-A1- 2002 197 983

## Beschreibung

### Technisches Gebiet

Die Erfindung betrifft ein Mobilfunlcendgerät für ein Mobilfunknetz, insbesondere nach dem GSM- oder UMTS-Standard, wobei das Mobilfunknetz eine zentrale Rechnereinheit aufweist, enthaltend:
(a) eine Empfangs- und eine Sendeeinheit,
(b) eine Anzeige mit einer hierarchischen Menüführung mit Menüpunkten,
(c) eine Steuereinheit zum Auswählen der Menüpunkte zum Bedienen des Mobilfunkendgeräts,
(d) Mittel zum Darstellen der Menüpunkten auf der Anzeige.

Ferner betrifft die Erfindung ein Verfahren für ein solches Mobilfunkendgerät.

### Stand der Technik

Mobilfunkendgeräte sind hinlänglich bekannt. Sie werden dazu verwendet, in einem Mobilfunknetz mit anderen Partnern, die ebenfalls über ein Mobilfunkendgerät verfügen, zu kommunizieren. Die Mobilfunkendgeräte weisen dazu eine jeweils geeignete Empfangs- und eine Sendeeinheit auf. Die Mobilfunkendgeräte arbeiten derzeit entweder nach dem GSM- oder nach dem UMTS-Standard. Diese Standards werden in zahlreicher Literatur, wie z. B. in "GSM Global System for Mobile Comminication", 2. Auflage, Eberspächer / Vögel, Verlag: Teubner Stuttgart-Leipzig, beschrieben.

Die Mobilfunkendgeräte werden hinsichtlich ihrer Bedienung und ihrer Anwendungsmöglichkeiten immer komfortabler. Die Bedienung erfolgt häufig über ein Menü, welches auf eine Anzeige dargestellt wird. Die Steuerung des Menüs erfolgt über geeignete Druck- bzw. Mikroschalter oder über die numerische Tastatur des Mobilfunkendgeräts. Die Menüs sind dazu in der Regel hierarchisch aufgebaut und als Textelemente, manchmal mit einzelnen visuellen Elemente zur Unterstützung des Textes, dargestellt. Bei neueren Mobilfunkendgeräten der Firma Nokia werden einzelne Menüpunkte mit solchen visuellen Elementen verwendet. Dies ist beispielsweise beim Typ Nr. 3210 dieser Firma der Fall. Hier wird jedoch immer nur ein Menüpunkt dargestellt. Die Menüpunkte in derselben hierarchischen Ebene lassen sich nicht gleichzeitig darstellen.

Nachteil dieser textgesteuerten Menüs mit einzelnen visuellen Elementen ist, dass die visuellen Elemente von Mobilfunkendgerät zu Mobilfunkendgerät bzw. von Hersteller zu Hersteller unterschiedlich ausfallen können. Hierdurch verlieren die visuellen Elemente ihre Bedeutung, weil sich keiner so richtig intuitiv unter dem Bild - wegen des geringen Wiedererkennungswertes - vorstellen kann, was für eine Funktion bzw. Menüpunkt sich hinter dem visuellen Element verstreckt. Sie benötigen daher immer ein zusätzliches textgesteuertes Menü.

Bei Mobilfunkendgeräten der Firma Motorola, z.B. Typ Timport, werden mehrere visuelle Elemente auf der Anzeige dargestellt, wobei jedem visuellen Element ein Menüpunkt zugeordnet wird. Diese visuelle Menüdarstellung befindet sich jedoch nur in der obersten ersten Ebene der Hierarchie. Wegen der Größe der Mobilfunkendgeräte kann die Speicherkapazität für visuelle Elemente nur sehr begrenzt sein. Auch bei diesen visuellen Elementen kann das Menü von Modell zu Modell variieren.

Die US 2002/0137502 Al beschreibt ein Mobilfunkendgerät, welches ausführbare Software und zugehörige Daten von einem Server eines Mobilfunknetzes zum Aktualisieren von Funktionalitäten des Mobilfunkendgeräts runterlädt. Dabei können neben der eigentlichen Software auch zugehörige Menüs, Symbole, akustische Signale und Aminationen übertragen werden. Die übermittelten Daten werden in dem Mobilfunkendgerät gespeichert und können erst nach einer durchgeführten Aktualisierung des Mobilfunkendgeräts benutzt werden.

### Offenbarung der Erfindung

Aufgabe der Erfindung ist es daher, die Nachteile des Standes der Technik zu vermeiden und ein Mobilfunkendgerät bzw. ein Verfahren für ein solches Mobilfunkendgerät zu schaffen, das eine einheitliche, möglichst vollständige, bildgesteuerte Menüführung aufweist.

Erfindungsgemäß wird die Aufgabe dadurch gelöst, daß bei einem Mobilfunkendgerät für ein Mobilfunknetz, insbesondere nach dem GSM- oder UMTS-Standard, wobei das Mobilfunknetz eine zentrale Rechnereinheit aufweist, der eingangs genannten Art
(e) Mittel zum Abrufen und Darstellen von visuellen und/oder akustischen Elementen für jeden Menüpunkte eines Menüs zentral aus einer Rechnereinheit des Mobilfunknetzes wobei bei einem Aufruf des Menüs die visuellen und/oder akustischen Elemente der entsprechenden Menüpunkte von der zentralen Rechnereinheit an des Mobilfunkendgerät übermittelt und von der Anzeige des Mobilfunkendgeräts dargestellt werden.

Weiterhin wird die Aufgabe durch ein Verfahren für Mobilfunkendgeräte der eingangs genannten Art gelöst, bei denen die Daten für die visuellen und/oder akustischen Elemente für jeden Menüpunkt eines Menüs in einer zentralen Rechnereinheit des Mobilfunknetzes gespeichert sind und diese Daten durch das Mobilfunkendgerät bei Aufruf des Menüs von der zentralen Rechnereinheit an das Mobilfunkendgerät übermittelt und von der Anzeige des Mobilfunkendgeräts dargestellt werden.

Die Erfindung beruht auf dem Prinzip, eine einheitliche Menüführung für die Bedienung von allen Mobilfunkendgeräten vorzuschlagen, die sich intuitiv bedienen lässt. Die Intuition wird durch die visuellen und/oder akustischen Elemente erreicht, welche durch die Einheitlichkeit und zentrale Verwaltung auf einem Zentralrechner des Mobilfunknetzes gewährleistet ist. Allen Menüpunkten lassen sich so visuelle und/oder akustische Elemente zentral und einheitlich zuordnen.

Die Erfindung weist eine hierarchisch aufgebaute die Menüführung auf. Durch diese Maßnahme muss der Benutzer des Mobilfunkendgeräts sich nicht mit allen Funktionen gleichzeitig befassen. Er kann sich intuitiv von einer Ebene zur nächsten durchorientieren.

Vorzugsweise sind hierzu Mittel vorgesehen, welche die visuellen Elemente auf der Anzeige mit Text erklären. Dies ist besonders für Benutzer, die die Menüführung nur selten bedienen oder Einsteiger, hilfreich. Auf diese Weise lassen sich die Funktionen, die den visuelle Elementen zugeordnet sind, leicht erlernen. Der Text stellt eine zusätzliche Hilfe für die Bedienung des Mobilfunkendgeräts dar.

In einer weiteren vorteilhaften Ausgestaltung der Erfindung sprechen die Mittel zur Erklärung der visuellen Elemente mit Text erst an, wenn der entsprechende Menüpunkt ausgewählt wird. Durch diese Maßnahme wird vermieden, dass ständig der Text von jedem Menüpunkt dargestellt wird.

Eine bevorzugte Ausbildung des erfindungsgemäßen Mobilfunkendgeräts ergibt sich, wenn die Anzeige als berührungsempfindliche Steuereinheit ausgebildet ist, wobei jeweils der Menüpunkt auswählt wird, dessen visuelles Element berührt wird. Solche berührungsempfindlichen Anzeigen werden auch "Touchscreen" genannt. Bei solchen Steuereinheiten ist es u. U. sogar nicht mehr erforderlich, dass eine übliche Tastatur benötigt wird. Die Tasten können auch auf der berührungsempfindlichen Anzeige als visuelle Elemente angezeigt werden.

Eine vorteilhafte Alternative ergibt sich, wenn ein Navigationselement als Steuereinheit vorgesehen ist. Da die Kosten für ein Mobilfunkendgerät mit berührungsempfindlicher Anzeige derzeit relativ hoch sein dürften, werden in naher Zukunft daher aus Kostengründen andere Navigationselemente bevorzugt werden, um die einzelnen Menüpunkten anzusteuern. Vorteilhafterweise könnte ein solches Navigationselement als Steuerpin mit Mikroschaltern oder Touchpad ausgebildet sein.

Um für den Benutzer die visuellen Elemente noch unterscheidbarer darzustellen, sind die visuellen Elemente farbig ausgestaltet.

Ein vorteilhafter Aspekt für die Einheitlichkeit liegt darin, wenn die visuellen Elemente für Menüpunkte fest vorgegeben sind. Da die visuellen Elemente nicht mehr verändert werden können, liegen sie für jeden Benutzer in gleicher Form vor.

Gelegentlich kann es jedoch vorkommen, dass das eine oder andere visuelle Element für jemanden individuell angepasst werden muss. Es ist daher auch eine vorteilhafte und flexible Ausgestaltung der Erfindung, wenn sich neben den fest vorgegebenen visuellen Elementen auch einige visuelle Elemente individuell einstellen lassen.

Der Überblick über das Menü lässt sich verbessern, wenn Mittel vorgesehen sind, die immer wenigstens zwei Menüpunkte bzw. die entsprechenden visuellen Elemente auf der Anzeige anzeigen. Hierbei sind jedoch die Größe der Anzeige zu berücksichtigen und die Auflösung, die für die visuellen Elemente benötigt werden.

Um zu verhindern, dass nicht ständig eine Verbindung mit dem Zentralrechner des Mobilfunknetzes gehalten werden muss, ist es eine vorteilhafte Ausgestaltung der Erfindung, einen Zwischenspeicher vorzusehen, in dem die visuellen Elemente zwischengespeichert werden. Damit müssen nur die visuellen Elemente nachgeladen werden, die in dem Zwischenspeicher nicht vorhanden sind. Der Zwischenspeicher kann ein dynamischer oder ein statischer Speicher sein.

Eine vorteilhafte Ausgestaltung des erfindungsgemäßen Verfahrens erhält man, wenn die Texterklärungen der visuellen Elemente der Menüpunkte in einer zentralen Rechnereinheit des Mobilfunknetzes gespeichert sind und die entsprechenden Daten durch das Mobilfunkendgerät bei Aufruf des entsprechenden Menüs von der zentralen Rechnereinheit an das Mobilfunkendgerät übermittelt und von der Anzeige des Mobilfunkendgeräts dargestellt wird. Auf diese Weise wird der Speicherplatz vom Mobilfunkendgerät aufgrund von Auslagerung von Daten auf einen Zentralrechner nicht überstrapaziert.

Durch die Verwendung von wenigstens zwei Menüpunkten als visuelle Elemente auf der Anzeige des Mobilfunkendgeräts wird die Übersichtlichkeit für den Anwender des Mobilfunkendgeräts erhöht.

Vorteilhafterweise werden auch bei dem erfindungsgemäßen Verfahren die visuellen Elemente der Menüs in einem Zwischenspeicher des Mobilfunkendgeräts zwischengespeichert. Hierdurch kann in dem Mobilfunkendgerät Speicherplatz gespart und die Größe des Mobilfunkendgeräts somit reduziert werden.

Weitere Vorteile ergeben sich aus dem Gegenstand der Unteransprüche.

### Kurze Beschreibung der Zeichnung

- Fig. 1: zeigt in einer Prinzipskizze einen Ausschnitt eines ersten Ausführungsbeispiels von einem erfindungsgemäßen Mobilfunkendgerät mit einem Steuerpin.
- Fig.2: zeigt in einer Prinzipskizze einen Ausschnitt eines zweiten Ausführungsbeispiels von einem erfindungsgemäßen Mobilfunkendgerät mit einem Touchscreen.
- Fig. 3: zeigt in einer Prinzipskizze einen Ausschnitt eines zweiten Ausführungsbeispiels von einem erfindungsgemäßen Mobilfunkendgerät mit einem Touchpad.
- Fig. 4: zeigt in einer Prinzipskizze ein Mobilfunknetz mit erfindungsgemäßen Mobilfunkendgeräten.
- Fig. 5: zeigt in einer Prinzipskizze die verschiedenen Ebenen eines Auswahlmenüs für ein erfindungsgemäßes Mobilfunkendgerät.

### Bevorzugte Ausführungsbeispiele

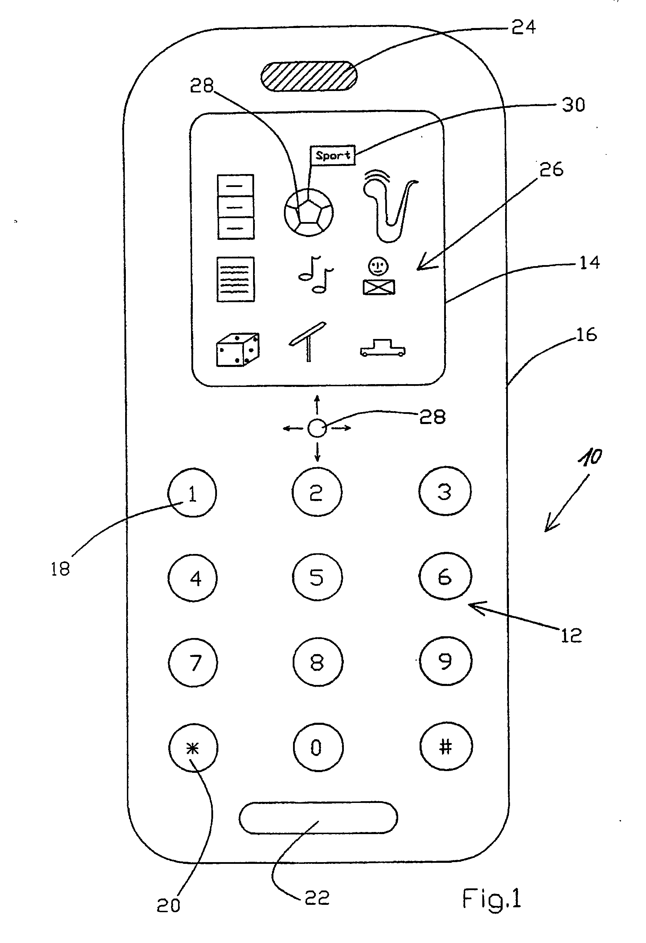

In Fig. 1 wird mit 10 ein erfindungsgemäßes Mobilfunkendgerät bezeichnet. Das Mobilfunkendgerät 10 enthält neben den üblichen, erforderlichen technischen Ausbildungen eine Tastatur 12 und eine Anzeige 14, welche in einem Gehäuse 16 angeordnet sind. Die Tastatur 12 besteht aus numerischen Tasten 18 und Sonderzeichen 20. Die Tasten 18 bzw. 20 können jedoch auch mit zusätzlichen anderen Funktionen belegt sein. Das Mobilfunkendgerät 10 weist in seinem Gehäuse 16 ferner ein Mikrofon 22 und einen Lautsprecher 24 auf. Auf der Anzeige 14 wird eine Matrix mit verschiedenen visuellen Elementen 26 dargestellt. Durch Bestätigung eines Steuerpins 28 kann das gewünschte visuelle Element 26 ausgewählt werden. Im vorliegenden Ausführungsbeispiel wurde aus den visuellen Elementen 26 das Bildelement "Sport" 28 ausgewählt.

Ein Benutzer des erfindungsgemäßen Mobilfunkendgeräts erkennt die gewünschte Auswahl an einem Textfeld 30, in dem im vorliegenden Beispiel der Text "Sport" geschrieben steht. Hinter jedem visuellen Element 26 steht ein eigener Menüpunkt. In der abgebildeten Anzeige sind beispielhaft die visuellen Elemente 26 für " Suchen, Kontakt, Sport, Notizen, Musik, Post, Spiele, Karte und Verkehr" dargestellt. Jede Ebene der Menüpunkte hat seine eigenen visuellen Elemente 26. Die Anzahl der visuellen Elemente 26 kann jedoch von Ebene zu Ebene variieren.

Durch Aufrufen eines Menüpunktes, in dem ein visuelles Element 26 ausgewählt wird, gelangt man in die nächste Ebene der Menüauswahl. Auch hier sind wiederum visuelle Elemente als Menüpunkte abgebildet.

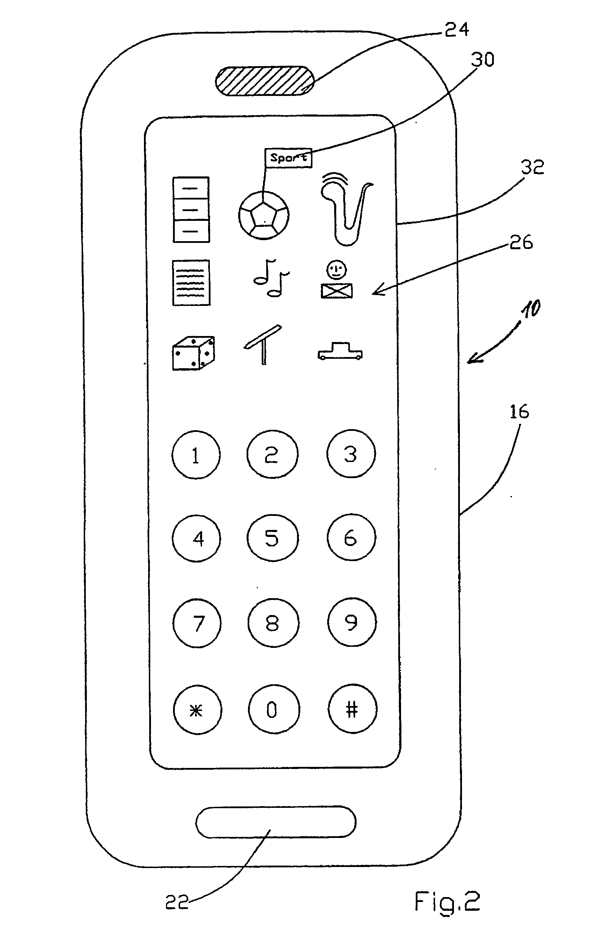

In Fig. 2 wird ebenfalls ein erfindungsgemäßes Mobilfunkendgerät 10 dargestellt. Gleiche Bestandteile werden daher mit denselben Bezugszeichen bezeichnet wie in der vorherigen Fig. 1. Gegenüber dem Ausführungsbeispiel von Fig. 1 weist das Mobilfunkendgerät 10 von Fig. 2 keine Tasten 12 und kein Steuerpin 28 auf. Stattdessen verfügt das Mobilfunkendgerät 10 über eine berührungsempfindliche Anzeige 32. Eine solche berührungsempfindliche Anzeige 32 wird auch "Touchscreen" genannt. Grundsätzlich funktioniert der Touchscreen 32 genauso wie der Steuerpin 28. Die Auswahl eines visuellen Elements 26 erfolgt jedoch jeweils durch Berührung des entsprechenden visuellen Elements 26 auf der Anzeige 32.

Durch Verwendung des Touchscreens 32 kann sogar auf eine Tastatur, wie in den anderen Ausführungsbeispielen, verzichtet werden. Die Tastatur 12 wird durch entsprechende Symbole im Touchscreen 32 simuliert. Auf diese Weise kann auf Wunsch die komplette Anzeige 32 für die Darstellung benutzt werden. Die Tastatursimulation ist nur erforderlich, wenn die Tasten benötigt werden.

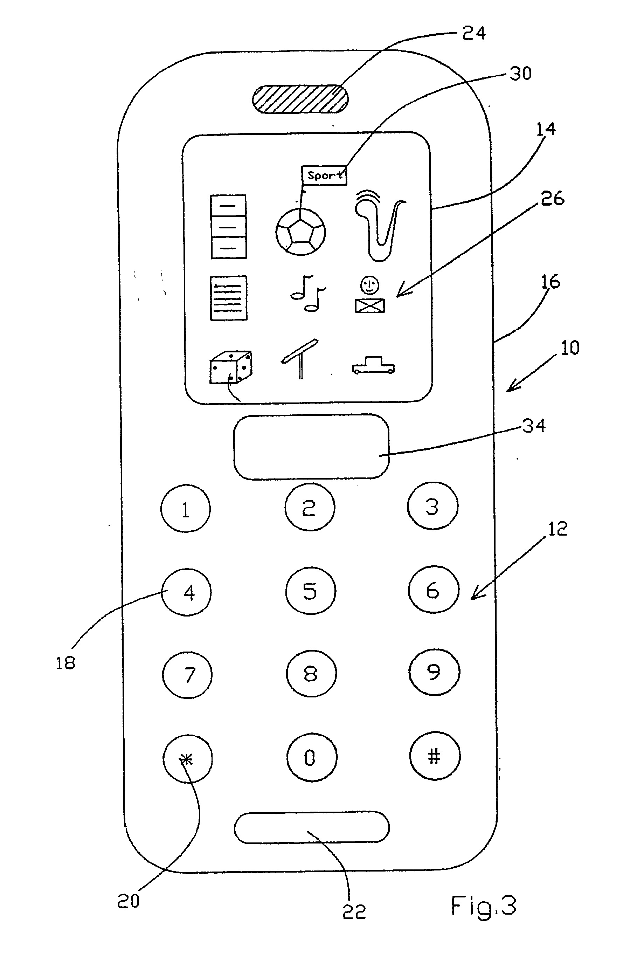

Fig. 3 zeigt ein weiteres Ausführungsbeispiel eines erfindungsgemäßen Mobilfunkendgeräts 10. Gleiche Bestandteile, wie in den vorherigen Ausführungsbeispielen, werden mit entsprechenden Bezugszeichen bezeichnet. In diesem Ausführungsbeispiel wird als Navigationselement diesmal jedoch ein sogenannter Touchpad 34 eingesetzt. Ein Touchpad 34 ist eine berührungsempfindliche Fläche, mit der durch Berührung die einzelnen Menüpunkte ausgewählt werden können. Je nach dem an welcher Stelle auf der Fläche des Touchpad 34 die Berührung erfolgt, wird der entsprechende Menüpunkt ausgewählt.

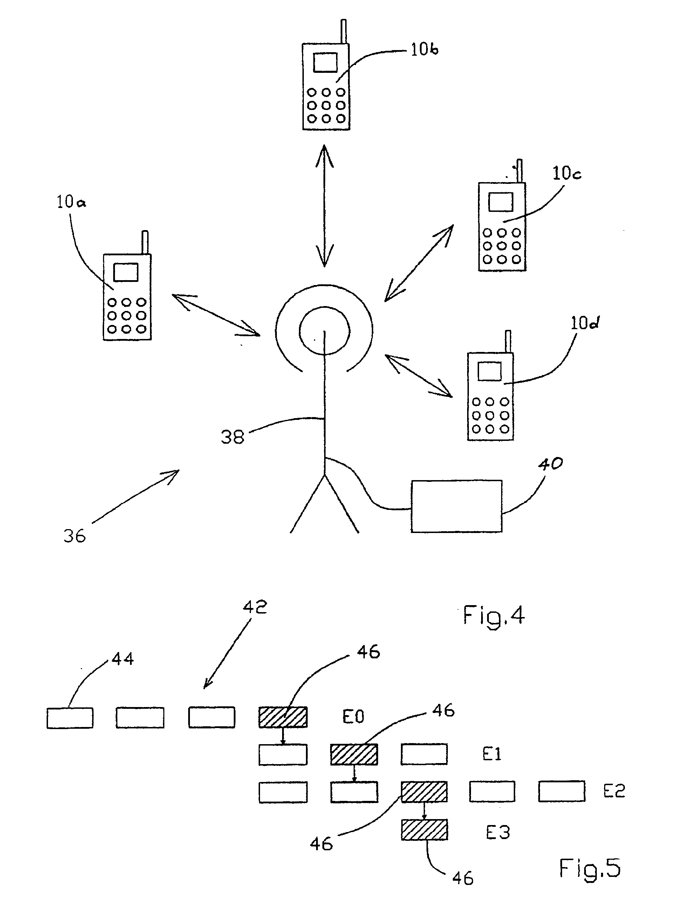

Fig. 4 stellt in einer Prinzipskizze ein Mobilfunknetz 36 dar. Das Mobilfunknetz 36 wird durch einen Sende- und Empfangsmast 38 und Mobilfunkendgeräte 10a-10d symbolisiert. Bei den Mobilfunkendgeräten 10a-10d handelt es sich um solche, wie sie in den vorherigen Figuren beschrieben wurden. Das Mobilfunknetz 36 verfügt über einen zentralen Rechner 40. In dem zentralen Rechner 40 sind sämtliche visuellen Elemente 26 für jeden Menüpunkt gespeichert. Wenn ein Mobilfunkendgerät 10 nun ein Menü abfragt, wird von dem zentralen Rechner 40 das entsprechende visuelle Element 28 für diesen Menüpunkt übermittelt. Auf diese Weise muss kein Mobilfunkendgerät 10 die visuellen Elemente 26 langfristig speichern. Sie werden lediglich in einem nicht dargestellten Zwischenspeicher der Mobilfunkendgeräte 10 kurzfristig zwischengespeichert. Durch dieses Verfahren wird nicht nur mit den Ressourcen der Mobilfunkendgeräte 10 sparsam umgegangen, sondern die visuellen Elemente 26 werden weitestgehend vereinheitlicht. Damit wird ein sehr hoher Wiedererkennungswert der visuellen Elemente 26 für den Benutzer des Mobilfunkendgeräts erreicht. Der Benutzer muss sich nunmehr nicht mehr durch unbekannte Menüs hindurchhangeln.

In Fig. 5 werden beispielhaft die verschiedenen Ebenen E0, E1, E2 und E3 eines Auswahlmenüs 42 dargestellt. Jedes der Rechtecke 44 ist ein visuelles Element 26 und stellt einen eigenen Menüpunkt dar. Die schraffierten Rechtecke 46 jeder Ebene E0, E1, E2 und E3 sind die jeweils ausgewählten Menüpunkte. Durch dieses Verfahren wird zudem vermieden, dass ein Benutzer sich sämtliche Menüpunkte einer Ebene anschauen muss, um in die nächste Ebene zu gelangen. Damit können natürlich erheblich schneller als herkömmlich die gewünschten Menüpunkte erreicht werden.

## Patentansprüche

1. Mobilfunkendgerät (10) für ein Mobilfunknetz (36), wobei das Mobilfunknetz (36) eine zentrale Rechnereinheit (40) aufweist *und das Mobilfunkendgerät (10) enthält:*
(a) eine Empfangs- und eine Sendeeinheit,
(b) eine Anzeige (14) mit einer hierarchischen Menüführung mit Menüpunkten,
(c) eine Steuereinheit (28) zum Auswählen der Menüpunkte zum Bedienen des Mobilfunkendgeräts (10),
(d) Mittel zum Darstellen der Menüpunkte auf der Anzeige (14),
**gekennzeichnet durch**
(e) Mittel zum Abrufen und Darstellen von visuellen und/oder akustischen Elementen (26) für jeden Menüpunkt eines Menüs zentral aus einer Rechnereinheit (40) des Mobilfunknetzes (36), wobei bei einem Aufruf des Menüs die visuellen und/oder akustischen Elemente (26) der entsprechenden Menüpunkte von der zentralen Rechnereinheit (40) an des Mobilfunkendgerät (10) übermittelt und von der Anzeige (14) des Mobilfunkendgeräts dargestellt werden.

2. Mobilfunkendgerät (10) nach Anspruch 1, **dadurch gekennzeichnet, dass** das Mobilfunkendgerät (10) für ein Mobilfunknetz (36) nach dem GSM- oder UMTS-Standard ausgebildet ist.

3. Mobilfunkendgerät (10) nach einem der Ansprüche 1 oder 2, **dadurch gekennzeichnet, dass** Mittel vorgesehen sind, welche die visuellen und/oder akustischen Elemente (26) auf der Anzeige (14) mit Text (30) erklären.

4. Mobilfunkendgerät (10) nach Anspruch 3, **dadurch gekennzeichnet, dass** die Mittel zur Erklärung der visuellen und/oder akustischen Elemente (26) mit Text (30) erst ansprechen, wenn der entsprechende Menüpunkt ausgewählt wird.

5. Mobilfunkendgerät (10) nach einem der Ansprüche 1 bis 4, **dadurch gekennzeichnet, dass** die Anzeige (14) als berührungsempfindliche Steuereinheit (32) ausgebildet ist, wobei jeweils der Menüpunkt auswählt wird, dessen visuelles Element (26) berührt wird.

6. Mobilfunkendgerät (10) nach einem der Ansprüche 1 bis 5, **dadurch gekennzeichnet, dass** ein Navigationselement (28; 34) als Steuereinheit vorgesehen ist.

7. Mobilfunkendgerät (10) nach Anspruch 6, **dadurch gekennzeichnet, dass** das Navigationselement als Steuerpin (28) mit Mikroschaltern oder als Touchpad (34) ausgebildet ist.

8. Mobilfunkendgerät (10) nach einem der Ansprüche 1 bis 7, **dadurch gekennzeichnet, dass** die visuellen Elemente (26) farbig vorgesehen sind.

9. Mobilfunkendgerät (10) nach einem der Ansprüche 1 bis 8, **dadurch gekennzeichnet, dass** die visuellen Elemente (26) für Menüpunkte fest vorgegeben sind.

10. Mobilfunkendgerät (10) nach einem der Ansprüche 1 bis 9, **dadurch gekennzeichnet, dass** die visuellen Elemente (26) einstellbar ausgebildet sind.

11. Mobilfunkendgerät (10) nach einem der Ansprüche 1 bis 10, **dadurch gekennzeichnet, dass** das Mittel zum Darstellen von wenigstens zwei visuellen Elementen (26) vorgesehen sind.

12. Mobilfunkendgerät (10) nach einem der vorherigen Ansprüche, **dadurch gekennzeichnet, dass** ein Zwischenspeicher vorgesehen ist, in dem die visuellen (26) Elemente zwischengespeichert werden.

13. Verfahren für ein Mobilfunkendgerät (10) nach einem der Ansprüche 1 bis 12, **dadurch gekennzeichnet, dass** die Daten für die visuellen und/oder akustischen Elemente für jeden Menüpunkt eines Menüs in einer zentralen Rechnereinheit (40) des Mobilfunknetzes (36) gespeichert sind und diese Daten durch das Mobilfunkendgerät (10) bei Aufruf des Menüs von der zentralen Rechnereinheit (40) an das Mobilfunkendgerät (10) übermittelt und von der Anzeige (14) des Mobilfunkendgeräts (10) dargestellt werden.

14. Verfahren nach Anspruch 13, **dadurch gekennzeichnet, dass** die Texterklärungen der visuellen und/oder akustischen Elemente (26) der Menüpunkte in einer zentralen Rechnereinheit (40) des Mobilfunknetzes (36) gespeichert sind und die entsprechenden Daten durch das Mobilfunkendgerät (10) bei Aufruf des entsprechenden Menüs von der zentralen Rechnereinheit (40) an das Mobilfunkendgerät (10) übermittelt und von der Anzeige (14) des Mobilfunkendgeräts (10) dargestellt werden.

15. Verfahren nach einem der Ansprüche 13 oder 14, **dadurch gekennzeichnet, dass** wenigstens zwei Menüpunkte als visuelle Elemente (26) auf der Anzeige (14) des Mobilfunkendgeräts (10) dargestellt werden.

16. Verfahren nach einem der Ansprüche 13 bis 15, **dadurch gekennzeichnet, dass** die visuellen Elemente (26) der Menüs in einem Zwischenspeicher des Mobilfunkendgeräts (10) zwischengespeichert werden.

## Claims

1. A mobile terminal (10) for a mobile radio network (36), wherein the mobile radio network (36) comprises a central processing unit (40) and the mobile terminal (10) comprises:
(a) a receiver and a transmitter unit,
(b) a display (14) with a hierarchical menu navigation with menu items,
(c) a control unit (28) for selecting the menu items for operating the mobile terminal (10),
(d) means for displaying the menu items on the display (14),
**characterized by**
(e) means for retrieving and displaying of visual and/or acoustic elements (26) for each menu item of a menu centrally from a processing unit (40) of the mobile radio network (36), wherein, on invocation of the menu, the visual and/or acoustic elements (26) of the corresponding menu items are transmitted from the central processing unit (40) to the mobile terminal (10) and are shown on the display (14) of the mobile terminal.

2. A mobile terminal (10) according to claim 1, **characterized in that** the mobile terminal (10) is adapted for a mobile radio network (36) according to the GSM or UMTS standard.

3. A mobile terminal (10) according to one of claims 1 or 2, **characterized in that** means are provided, which explain the visual and/or acoustic elements (26) on the display (14) by using text (30).

4. A mobile terminal (10) according to claim 3, **characterized in that** the means for the explanation of the visual and/or acoustic elements (26) by using text (30) are only responsive when the corresponding menu item is selected.

5. A mobile terminal (10) according to one of claims 1 to 4, **characterized in that** the display (14) is adapted to be a touch-sensitive control unit (32), wherein the menu item is selected, which visual element is touched (26).

6. A mobile terminal (10) according to one of claims 1 to 5, **characterized in that** a navigation element (28, 34) is provided as a control unit.

7. A mobile terminal (10) according to claim 6, **characterized in that** said navigation element is formed as a control pin (28) with micro-switches or as a touch pad (34).

8. A mobile terminal (10) according to one of claims 1 to 7, **characterized in that** the visual elements (26) are coloured.

9. A mobile terminal (10) according to one of claims 1 to 8, **characterized in that** the visual elements (26) for menu items are predetermined.

10. A mobile terminal (10) according to one of claims 1 to 9, **characterized in that** the visual elements (26) are adapted to be adjustable (26).

11. A mobile terminal (10) according to one of claims 1 to 10, **characterized in that** means for displaying at least two visual elements (26) are provided.

12. A mobile terminal (10) according to any one of the preceding claims, **characterized in that** a cache provided, in which the visual elements (26) are buffered.

13. A method for a mobile terminal (10) according to any one of claims 1 to 12, **characterized in that** the data for the visual and/or acoustic elements for each menu item of a menu are stored in a central processing unit (40) of the mobile radio network (36), and the data is transmitted from the central processing unit (40) to the mobile terminal (10) and displayed on the display (14) of the mobile terminal (10) by the mobile terminal (10) on invocation of the menu.

14. A method according to claim 13, **characterized in that** the explaining text of the visual and/or acoustic elements (26) of the menu items are stored in a central processing unit (40) of the mobile radio network (36), and the corresponding data is transmitted from the central processing unit (40) to the mobile terminal (10) and displayed on the display (14) of the mobile terminal (10) by the mobile terminal (10) on invocation of the respective menu.

15. A method according to one of claims 13 or 14, **characterized in that** at least two menu items are displayed as visual elements (26) on the display (14) of the mobile terminal (10).

16. A method according to one of claims 13 to 15, **characterized in that** the visual elements (26) of the menus are buffered in a cache of the mobile terminal (10).

## Revendications

1. Terminal de radiotéléphonie mobile (10) pour un réseau de radiotéléphonie mobile (36) pour lequel le réseau de radiotéléphonie mobile (36) présente une unité centrale de calcul (40) et le terminal de radiotéléphonie mobile (10) comprend:
(a) une unité d'émission et de réception,
(b) un dispositif d'affichage (14) muni d'une commande par menu hiérarchique comportant des points de menu,
(c) une unité de commande (28) destinée à sélectionner les points de menu en vue de la commande du terminal de radiotéléphonie mobile (10),
(d) des moyens destinés à représenter les points de menu sur le dispositif d'affichage (14),
**caractérisé par**
(e) des moyens destinés à appeler et représenter des éléments visuels et/ou acoustiques (26) pour chaque point de menu d'un menu de manière centralisée à partir de l'unité de calcul (40) du réseau de radiotéléphonie mobile (36), les éléments visuels et/ou acoustiques (26) des points de menu correspondants étant transmis, lors de l'appel du menu, par l'unité centrale de calcul (40) au terminal de radiotéléphonie mobile (10) et étant représentés par le dispositif d'affichage (14) du terminal de radiotéléphonie mobile.

2. Terminal de radiotéléphonie mobile (10) selon la revendication 1, **caractérisé en ce que** le terminal de radiotéléphonie mobile (10) est configuré pour un réseau de radiotéléphonie mobile (36) selon la norme GSM ou UMTS.

3. Terminal de radiotéléphonie mobile (10) selon l'une quelconque des revendications 1 ou 2, **caractérisé en ce qu**'il est prévu des moyens qui expliquent les éléments visuels et/ou acoustiques (26) sur le dispositif d'affichage (14) à l'aide d'un texte (30).

4. Terminal de radiotéléphonie mobile (10) selon la revendication 3, **caractérisé en ce que** les moyens destinés à expliquer les éléments visuels et/ou acoustiques (26) à l'aide d'un texte (30) se déclenchent une fois le point de menu correspondant sélectionné.

5. Terminal de radiotéléphonie mobile (10) selon l'une quelconque des revendications 1 à 4, **caractérisé en ce que** le dispositif d'affichage (14) est configuré sous forme d'unité de commande tactile (32), sélectionnant à chaque fois le point de menu dont l'élément visuel (26) est touché.

6. Terminal de radiotéléphonie mobile (10) selon l'une quelconque des revendications 1 à 5, **caractérisé en ce qu**'un élément de navigation (28 ; 34) est prévu comme unité de commande.

7. Terminal de radiotéléphonie mobile (10) selon la revendication 6, **caractérisé en ce que** l'élément de navigation est configuré sous forme de tige de commande (28) munie de microrupteurs ou sous forme de pavé tactile (34).

8. Terminal de radiotéléphonie mobile (10) selon l'une quelconque des revendications 1 à 7, **caractérisé en ce que** les éléments visuels (26) sont prévus en couleur.

9. Terminal de radiotéléphonie mobile (10) selon l'une quelconque des revendications 1 à 8, **caractérisé en ce que** les éléments visuels (26) sont prédéfinis pour les points de menu.

10. Terminal de radiotéléphonie mobile (10) selon l'une quelconque des revendications 1 à 9, **caractérisé en ce que** les éléments visuels (26) sont configurés de manière à pouvoir être réglés.

11. Terminal de radiotéléphonie mobile (10) selon l'une quelconque des revendications 1 à 10, **caractérisé en ce que** les moyens sont configurés de manière à représenter au moins deux éléments visuels (26).

12. Terminal de radiotéléphonie mobile (10) selon l'une quelconque des revendications précédentes, **caractérisé en ce qu**'il est prévu une mémoire temporaire dans laquelle sont mémorisés temporairement les éléments visuels (26).

13. Procédé pour un terminal de radiotéléphonie mobile (10) selon l'une quelconque des revendications 1 à 12, **caractérisé en ce que** les données pour les éléments visuels et/ou acoustiques sont mémorisées, pour chaque point de menu d'un menu, dans une unité centrale de calcul (40) du réseau de radiotéléphonie mobile (36) et que ces données sont transmises par le terminal de radiotéléphonie mobile (10), lors de l'appel du menu, par l'unité centrale de calcul (40) au terminal de radiotéléphonie mobile (10) et représentées par le dispositif d'affichage (14) du terminal de radiotéléphonie mobile (10).

14. Procédé selon la revendication 13, **caractérisé en ce que** les explications textuelles des éléments visuels et/ou acoustiques (26) des points de menu sont mémorisées dans une unité centrale de calcul (40) du réseau de radiotéléphonie mobile (36) et les données correspondantes sont transmises par le terminal de radiotéléphonie mobile (10), lors de l'appel du menu, par l'unité centrale de calcul (40) au terminal de radiotéléphonie mobile (10) et représentées par le dispositif d'affichage (14) du terminal de radiotéléphonie mobile (10).

15. Procédé selon l'une quelconque des revendications 13 ou 14, **caractérisé en ce qu**'au moins deux points de menu sont représentés sous forme d'éléments visuels (26) sur le dispositif d'affichage (14) du terminal de radiotéléphonie mobile (10).

16. Procédé selon l'une quelconque des revendications 13 à 15, **caractérisé en ce que** les éléments visuels (26) du menu sont mémorisés temporairement dans une mémoire temporaire du terminal de radiotéléphonie mobile (10).
